# EUROPEAN PATENT APPLICATION

(11) **EP 1 898 415 A1**
(43) Date of publication of application: **12.03.2008**
(21) Application number: 07016851.3
(22) Date of filing: 28.08.2007
(51) Int. Cl.: G11B 27/034, G11B 27/32, G11B 27/34, H04N 5/76

(54) **Video recording apparatus**

(30) Priority: 05.09.2006 JP 2006240446
(71) Applicant: Funai Electric Co., Ltd., Daito-shi, Osaka 574-0013 (JP)
(72) Inventor: Suzu, Hirokazu, Daito-shi Osaka 574-0013 (JP)
(74) Representative: Grünecker, Kinkeldey, Stockmair & Schwanhäusser Anwaltssozietät

(57) **Abstract**

Disclosed is a video recording apparatus, including: a storage section which stores a program data set and the program data set is copied onto a storage medium; a copy-complete information grant section which grants copy-complete information in association with one program data set when a copying operation of the one program data set onto the storage medium is completed; a copy-complete information storage section to store copy-complete information; a display control section to display, in a form of a list, titles of program data sets stored in the storage section and a predetermined indication of whether a copying operation of the program data set is completed, based on the copy-complete information; a selecting section to receive a selection of a title of program data set to be deleted; and a selective delete section to delete the program data set selected.

## Description

### BACKGROUND OF THE INVENTION

### 1. Field of the Invention

The present invention relates to a video recording apparatus.

### 2. Description of the Related Art

There is conventionally known a video recording apparatus which can copy a program data set recorded in a storage medium such as an HDD (Hard Disk Drive) provided in a video recording apparatus onto an external storage medium of the video recording apparatus such as a DVD (Digital Versatile Disk). For example, there is known a video recording apparatus which deletes a program data set in an HDD in accordance with an evaluation score indicative of whether data has been copied on an external storage medium (for example, Japanese Patent Application Publication Laid-open No. 2005-260562).

There is also known an apparatus which successively deletes program data sets in an HDD when the program data sets are copied onto an external storage medium (for example, Japanese Patent Application Publication Laid-open No. 2002-314924).

If the program data set which is already copied onto another storage medium is automatically deleted as in Japanese Patent Application Publication Laid-open No. 2005-260562 or Japanese Patent Application Publication Laid-open No. 2002-314924, however, a copied program data set which a user desires to keep in an HDD is also deleted.

### SUMMARY OF THE INVENTION

It is a main object of the present invention to provide a video recording apparatus capable of more preferably deleting a program data set which has already been copied.

According to a first aspect of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section;
a selecting section to receive a selection of a title of program data set to be deleted from the storage section among the titles of program data sets stored in the storage section which are displayed on the display section in the form of the list;
a selective delete section to delete, from the storage section, the program data set which has the title selected by the selecting section;
an instructing section to instruct to delete all of the program data sets to which the copy-complete information is granted; and
an all-delete section to collectively delete, from the storage section, program data sets to which the copy-complete information is granted based on the copy-complete information stored in the copy-complete information storage section when the instructing section instructs to delete all of the program data sets to which the copy-complete information is granted.

According to a second aspect of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section;
a selecting section to receive a selection of a title of program data set to be deleted from the storage section among the titles of program data sets stored in the storage section which are displayed on the display section in the form of the list; and
a selective delete section to delete, from the storage section, the program data set which has the title selected by the selecting section.

According to a third aspect of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section; and
an all-delete section to collectively delete, from the storage section, program data sets to which the copy-complete information is granted, among titles of program data sets stored in the storage section and displayed on the display section in the form of the list.

According to a fourth aspect of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with a title of one program data set stored in the storage section when a copying operation of the one program data set stored in the storage section onto the second storage medium is completed;
an instructing section to instruct to delete all of the program data sets to which the copy-complete information is granted; and
an all-delete section to collectively delete, from the storage section, program data sets to which the copy-complete information is granted based on the copy-complete information stored in the copy-complete information storage section when the instructing section instructs to delete all of the program data sets to which the copy-complete information is granted.

### BRIEF DESCRIPTION OF THE DRAWINGS

The above and further objects, features and advantages of the present invention will become more apparent from the following detailed description taken in conjunction with the accompanying drawings, wherein:
Fig. 1 is a schematic block diagram of a digital broadcast recording apparatus according to the present invention;
Fig. 2 is a block diagram showing a structure of a digital broadcast recording apparatus according to a first embodiment of the present invention;
Fig. 3 is a diagram showing one example of a list display of the present invention;
Fig. 4 is an explanatory flowchart of a copy-complete flag grant operation of the digital broadcast recording apparatus of the present invention;
Fig. 5 is an explanatory flowchart of a deleting operation of a program data set of the digital broadcast recording apparatus according to the first embodiment of the present invention.
Fig. 6 is a block diagram showing a structure of a digital broadcast recording apparatus according to a second embodiment of the present invention;
Fig. 7 is an explanatory flowchart of a deleting operation of a program data set of the digital broadcast recording apparatus according to the second embodiment of the present invention.

### DESCRIPTION OF THE PREFERRED EMBODIMENTS

The best mode for carrying out a video recording apparatus according to the present invention will be explained in detail with reference to the drawings. In these embodiments, a digital broadcast recording apparatus will be explained as an example of the video recording apparatus.

### (First Embodiment)

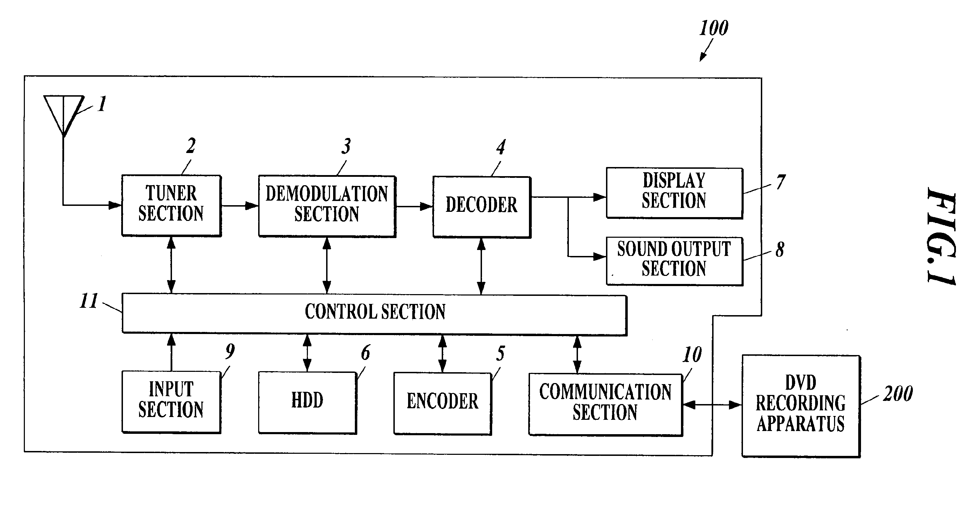

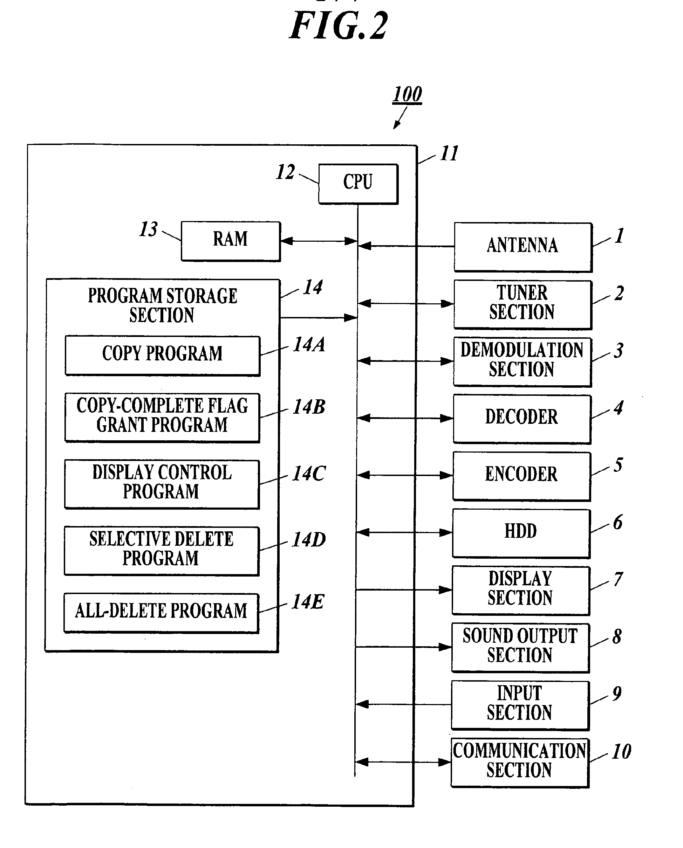

First, a digital broadcast recording apparatus 100 according to a first embodiment of the present invention will be explained with reference to Figs. 1 and 2. As shown in Figs. 1 and 2, the digital broadcast recording apparatus 100 of the embodiment includes an antenna 1, a tuner section 2, a demodulation section 3, a decoder 4, an encoder 5, an HDD 6, a display section 7, a sound output section 8, an input section 9, a communication section 10 and a control section 11. The digital broadcast recording apparatus 100 is connected to a DVD recording apparatus 200.

The antenna 1 is a parabolic antenna or an UHF antenna. The antenna 1 receives broadcast waves including digital broadcast signals such as ground wave digital broadcast, BS/CS broadcast, and outputs RF signals such as ground wave digital signals, BS/CS broadcast signals to the tuner section 2. When broadcast is received through a CATV line, a connection cable (not shown) may be included.

The tuner section 2 includes a mixer (not shown), a selection circuit (not shown), and an A/D converter circuit (not shown). An RF signal which is input from the antenna 1 by a mixer or a selection circuit is converted into an IF (Intermediate Frequency) signal of a channel desired by a user, and the produced IF signal is converted into digital data by the A/D converter circuit.

The demodulation section 3 demodulates digital data which is input from the tuner section 2 and outputs the demodulated data to the decoder 4.

The decoder 4 decodes digital data which is input from the demodulation section 3 to produce a program data set and voice data, and outputs them to the display section 7 and the sound output section 8.

The encoder 5 encodes the program data set and voice data which are output from the decoder 4 through a CPU 12 and outputs the encoded data to the HDD 6.

The HDD 6 includes a magnetic storage medium as a first storage medium. The HDD 6 stores the program data set and voice data which are input from the encoder 5, and functions as a storage section.

When a later-described copy-complete flag grant program 14B is executed, the HDD 6 stores a copy-complete flag, and functions as a copy-complete information storage section.

The display section 7 includes an LCD (Liquid Crystal Display) and PDP (Plasma Display Panel), and displays a video based on the program data set which is output from the decoder 4.

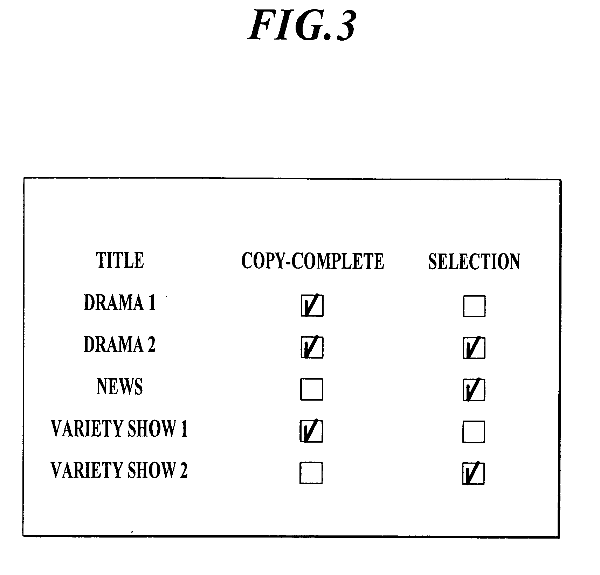

The display section 7 displays a list of titles of program data sets stored in the HDD 6 and a predetermined indication of whether the program data set has already been copied (copy-complete), in accordance with a control signal which is input from the control section 11. An example of the list display is shown in Fig. 3. In Fig. 3, titles of program data sets stored in the HDD 6 are displayed and a list of first check boxes indicating whether copy is completed and second check boxes indicating whether it is selected are displayed adjacent to the titles. In Fig. 3, a check mark is displayed in the first check box of program data sets which has been copied onto the DVD. When a program data set is selected as the program data set to be deleted from the HDD 6, a check mark is displayed in the second check box of that program data set.

The sound output section 8 includes a speaker, and outputs sound based on sound data which is output from the decoder 4.

The input section 9 is a remote control unit having various keys for inputting various operation signals. If a user operates the input section 9, the input section 9 outputs various operation signals to the control section 11.

More concretely, the input section 9 includes a list display key (not shown). If the list display key is pushed down, the input section 9 outputs, to the control section 11, an operation signal for displaying on the display section 7 a list of titles of program data sets stored in the HDD 6 and a predetermined indication of whether that program has already been copied.

Among titles of program data sets stored in the HDD 6 which are displayed on the display section 7 in the form of a list, the input section 9 outputs, to the control section 11, an operation signal for selecting a title of program data set to be deleted from the HDD 6, and functions as a selecting section.

The input section 9 includes an all-delete key for outputting, to the control section 11, an operation signal for instructing to delete all of the program data set to which copy-complete flags as later-described copy-complete information are granted. The input section 9 functions as an instructing section.

The communication section 10 includes input/output terminals. The communication section 10 carries out communication between the digital broadcast recording apparatus 100 and the DVD recording apparatus 200.

As shown in Fig. 2, the control section 11 includes the CPU (Central Processing Unit) 12, a RAM (Random Access Memory) 13 and the program storage section 14.

The CPU 12 reads a processing program stored in the program storage section 14, develops the same in the RAM 13, and controls the entire digital broadcast recording apparatus 100.

The RAM 13 develops a processing program executed by the CPU 12 in a program storage area in the RAM 13, and stores, in a data storage area, input data and a processing result generated when the processing program is executed.

The program storage section 14 includes a storage medium (not shown) in which a program and data are previously stored. This storage medium comprises a semiconductor memory for example. The program storage section 14 stores various data sets and various processing programs which allows the CPU 12 to realize a function for controlling the entire digital broadcast recording apparatus 100. The program storage section 14 also stores data processed by executing these programs. More specifically, the program storage section 14 stores a copy program 14A, a copy-complete flag grant program 14B, a display control program 14C, a selective delete program 14D and an all-delete program 14E as shown in Fig. 2 for example.

The copy program 14A makes the CPU 12 control the communication section 10 to send a program data set stored in the HDD 6 to the DVD recording apparatus 200, and copy the program data set on a DVD as the second storage medium.

When a copying operation of one program data set stored in the HDD 6 onto a DVD is completed, the copy-complete flag grant program 14B makes the CPU 12 grant a copy-complete flag in association with the one program data set stored in the HDD 6, and store the copy-complete flag in the HDD 6. The CPU 12 executes the copy-complete flag grant program 14B and with this, the CPU 12 functions as copy-complete information grant section.

The display control program 14C makes the CPU 12 control the display section 7 to display, in a form of a list, titles of program data sets stored in the HDD 6 and a predetermined indication of whether the program has already been copied, based on presence or absence of copy-complete flag stored in the HDD 6.

More specifically, when a list-display key (not shown) of the input section 9 is pushed down, the display control program 14C makes the CPU 12 display the list on the display section 7.

The CPU 12 functions as a display control section by executing the display control program 14C.

When the input section 9 is operated and an operation signal for selecting a title of a program data set to be deleted from the HDD 6 among titles of program data sets stored in the HDD 6 which are displayed on the display section 7 in the form of a list is input, the selective delete program 14D makes the CPU 12 delete the program data set of that selected title from the HDD 6. The CPU 12 functions as a selective delete section by executing the selective delete program 14D.

The all-delete program 14E makes the CPU 12 collectively delete, from the HDD 6, program data sets to which copy-complete flags are granted among titles of program data sets stored in the HDD 6 which are displayed on the display section 7 in the form of a list.

More specifically, when the all-delete key of the input section 9 is pushed down and an operation signal for instructing to delete all of the program data sets to which the copy-complete flags are granted is input, the all-delete program 14E makes the CPU 12 delete the program data sets from the HDD 6.

The CPU 12 functions as the all-delete section by executing the all-delete program 14E.

The DVD recording apparatus 200 is a DVD recorder for example, and stores the program data set sent from the digital broadcast recording apparatus 100 onto a DVD.

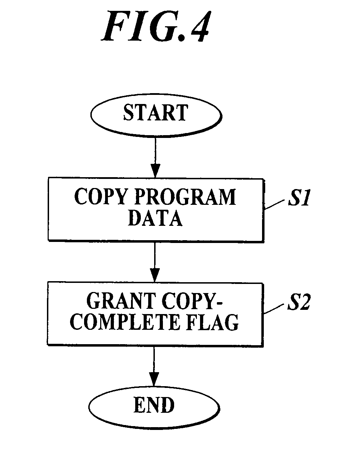

Next, a copy-complete flag grant operation of the above-described digital broadcast recording apparatus 100 according to the first embodiment will be explained with reference to a flowchart shown in Fig. 4.

First, the CPU 12 executes the copy program 14A and controls the communication section 10 to send the program data set stored in the HDD 6 to the DVD recording apparatus 200, and copy the program data set onto the DVD as the storage medium (step S1).

Next, the CPU 12 executes the copy-complete flag grant program 14B, grants a copy-complete flag in association with the one program data set stored in the HDD 6, and stores the copy-complete flag in the HDD 6 (step S2).

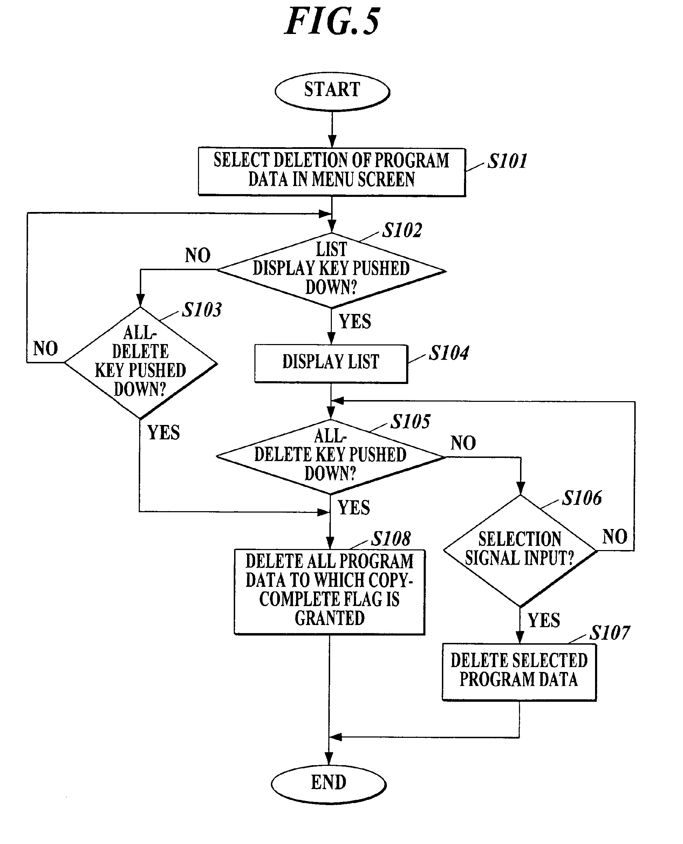

Next, a deleting operation of a program data set by the digital broadcast recording apparatus 100 according to the first embodiment will be explained with reference to a flowchart shown in Fig. 5.

In a menu screen, if the input section 9 is operated and an operation signal for selecting the deletion of a program data set is input (step S101), the CPU 12 determines whether the list-display key is pushed down by determining whether an operation signal instructing the display of list is input (step S102).

If the CPU 12 determines that the list-display key is not pushed down in step S102 (step S102; No), the CPU 12 determines whether the all-delete key is pushed down by determining whether an operation signal for instructing to delete all of the program data sets to which the copy-complete flags are granted (step S103) among program data sets stored in the HDD 6 is input.

In step S103, if the CPU 12 determines that the all-delete key is not pushed (step S103; No), the procedure is returned to step S102.

In step S103, if the CPU 12 determines that the all-delete key is pushed (step S103; Yes), the procedure advances to step S108.

In step S102, if the CPU 12 determines that the list-display key is pushed down (step S102; Yes), the CPU 12 executes the display control program 14C, and displays a list of titles of program data sets stored in the HDD 6 and a predetermined indication of whether the copying operation of that program is completed based on presence and absence of a granted copy-complete flag stored in the HDD 6 (step S104).

More specifically, the CPU 12 executes the display control program 14C, and as shown in Fig. 3, the CPU 12 displays, in the form of a list, titles of program data sets stored in the HDD 6, the first check boxes indicating whether the copying operation is completed adjacent to the title, and the second check boxes indicating whether it is selected. A check mark is indicated in a first check box of a program data set which has already been copied onto a DVD. When the program data set is selected as the program data set to be deleted from the HDD 6, a check mark is indicated in the second check box of that program data set.

Next, the CPU 12 determines whether the all-delete key is pushed down by determining whether an operation signal for instructing to delete all of the program data sets to which copy-complete flags are granted among program data sets stored in the HDD 6 is input (step S105).

In step S105, if the CPU 12 determines that the all-delete key is not pushed down (step S105; No), the CPU 12 determines whether an operation signal for selecting a title of program data set to be deleted from the HDD 6 among titles of program data sets stored in the HDD 6 which are displayed on the display section 7 in the form of a list is input by operating the input section 9(step S106).

In step S106, if the CPU 12 determines that the operation signal for selecting a title of the program data set to be deleted from the HDD 6 among titles of program data sets stored in the HDD 6 which are displayed on the display section 7 in the form of a list is not input (step S106; No), the procedure is returned to step S105.

In step S106, if the CPU 12 determines that the operation signal for selecting a title of program data set to be deleted from the HDD 6 among titles of program data sets stored in the HDD 6 which are displayed on the display section 7 in the form of a list is input (step S106; Yes), the CPU 12 executes the selective delete program 14D and deletes the program data set of the selected title from the HDD 6 (step S107) .

In step S105, if the CPU 12 determines that the all-delete key is pushed down (step S105; Yes), the CPU 12 executes the all-delete program 14E, and collectively deletes, from the HDD 6, program data sets to which the copy-complete flags are granted among titles of program data sets stored in the HDD 6 which are displayed on the display section 7 in the form of a list (step S108).

According to the above-explained digital broadcast recording apparatus 100 of the first embodiment, when the CPU 12 executes the copy-complete flag grant program 14B and the copying operation of one program data set stored in the HDD 6 onto a DVD is completed, the copy-complete flag is granted in association with the one program data set stored in the HDD 6, the copy-complete flag granted based on execution of the copy-complete flag grant program 14B by the CPU 12 is stored in the HDD 6, a title of program data set stored in the HDD 6 and a predetermined indication of whether the program has been copied are displayed on the display section 7 in the form of a list based on the copy-complete flag stored in the HDD 6 by the CPU 12 executing the display control program 14C, a title of program data set to be deleted from the HDD 6 is selected on the input section 9 from titles of program data sets stored in the HDD 6 which are displayed on the display section 7 in the form of a list, and the program data set having the title selected on the input section 9 is deleted from the HDD 6 by executing the selective delete program 14D by the CPU 12. Therefore, it is possible to visually check whether the copying operation is completed from the list, and only the program data set which a user desires to delete from the HDD 6 can be deleted, and even if the program data set has already been copied, the copied program data set can be kept in the HDD 6 if desired, and the copied program data set can be deleted more preferably.

It is possible to visually check whether the copying operation is completed from the list, and it is possible to check whether there is a copied program data set which a user desires to keep in the HDD 6.

When it is instructed on the input section 9 to delete all of the program data sets to which copy-complete flags are granted and it is instructed to delete all of the program data sets to which copy-complete flags are granted on the input section 9 by the CPU 12 executing the all-delete program 14E, the program data set to which the copy-complete flags are granted are collectively deleted from the HDD 6 based on the copy-complete flags stored in the HDD 6. Therefore, program data sets which have already been copied onto a DVD can be deleted collectively only by instructing the "all delete" on the input section 9. Thus, troubles for deleting the copied program data sets by selecting such program data sets one by one can be omitted, and a copied program data set can be deleted more preferably.

### (Second Embodiment)

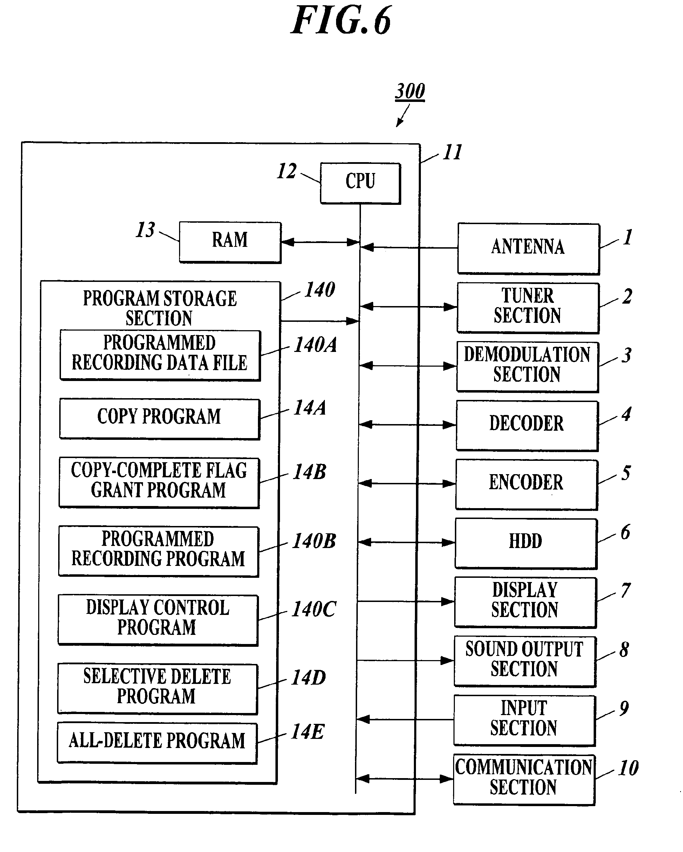

A television broadcast recording apparatus 300 according to a second embodiment of the present invention is different from the television broadcast recording apparatus 100 of the first embodiment only in a structure of a program storage section 140 as shown in Fig. 6, and thus, the same structures are designated with the same symbols and explanation thereof will be omitted.

The program storage section 140 includes a storage medium (not shown) in which a program and data are previously stored. The storage medium comprises a semiconductor memory for example. The program storage section 140 stores various data sets and various processing programs which allows the CPU 12 to realize a function for controlling the entire digital broadcast recording apparatus 300. The program storage section 140 also stores data processed by executing these programs. More specifically, the program storage section 140 stores a programmed recording data file 140A, the copy program 14A, the copy-complete flag grant program 14B, a programmed recording program 140B, a display control program 140C, the selective delete program 14D and the all-delete program 14E as shown in Fig. 6.

The programmed recording data file 140A stores a title of program data set to be stored in the HDD 6, broadcast starting time and broadcast ending time of the program in association with each other. There, the broadcast starting time and broadcast ending time are obtained by EPG (Electric Program Guide) data for example.

When a title of program data set to be stored in the HDD 6 is input to the CPU 12 by operating the input section 9, the programmed recording program 140B obtains a data amount of that program data set from EPG data, compares with the data amount and a free space in the HDD 6 with each other, and determines whether the free space in the HDD 6 is smaller than the data amount, and if it is determined that the free space in the HDD 6 is not smaller than the data amount, the programmed recording program 140B stores the title of that program data set, broadcast starting time and broadcast ending time of the program in the programmed recording data file 140A in association with each other.

The display control program 140C makes the CPU 12 control the display section 7 to display, in a form of a list, titles of program data sets stored in the HDD 6 and a predetermined indication of whether the program has already been copied, based on presence or absence of copy-complete flag stored in the HDD 6.

More specifically, the display control program 140C makes the CPU 12 execute the programmed recording program 140B, and when it is determined that the free space in the HDD 6 is smaller than the data amount of program data set to be stored in the HDD 6, the display control program 140C controls the display section 7, displays, in the form of a list, titles of program data sets stored in the HDD 6 and a predetermined indication of whether the program data set has already been copied based on presence or absence of a copy-complete flag stored in the HDD 6.

The CPU 12 functions as a display control section by executing the display control program 140C.

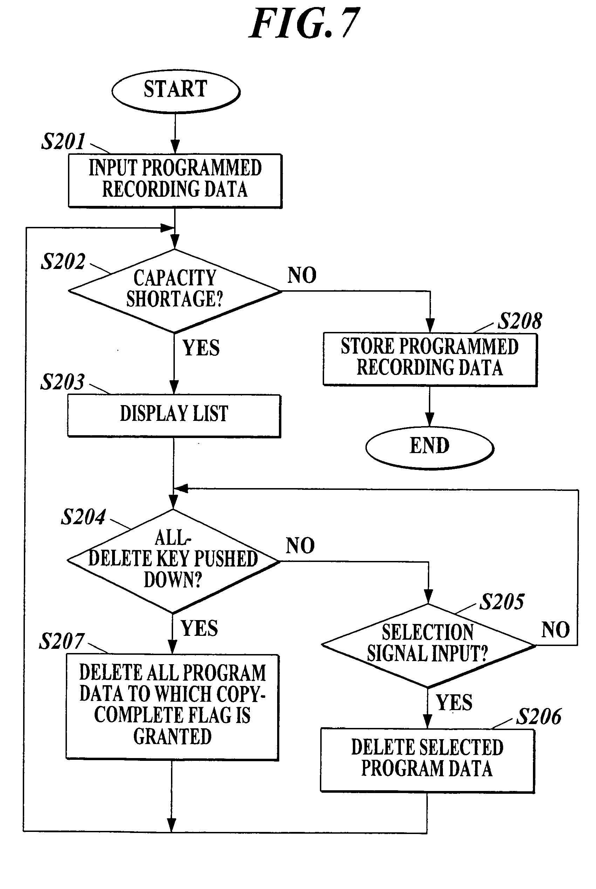

Next, the deleting operation of a program data set by the above-described digital broadcast recording apparatus 300 according to the second embodiment will be explained with reference to a flowchart shown in Fig. 7.

If a title of program data set to be stored in the HDD 6 is input by operating the input section 9 (step S201), the CPU 12 executes the programmed recording program 140B to obtain a data amount of that program data set from the EPG data, the CPU 12 compares the data amount and a free space in the HDD 6 with each other and determines whether the free space in the HDD 6 is smaller than the data amount (step S202).

In step S202, if the CPU 12 determines that the free space in the HDD 6 is smaller than the data amount of the program data set to be stored in the HDD 6 (step S202; Yes), the CPU 12 executes the display control program 140C to control the display section 7, and displays, in the form of a list, titles of program data sets stored in the HDD 6 and a predetermined indication of whether the program data set has already been copied based on presence or absence of a copy-complete flag stored in the HDD 6 (step S203).

Next, the CPU 12 determines whether the all-delete key is pushed down by determining whether an operation signal instructing to delete all of the program data sets to which the copy-complete flags are granted among program data sets stored in the HDD 6 is input (step S204).

In step S204, if the CPU 12 determines that the all-delete key is not pushed down (step S204; No), the CPU 12 determines whether an operation signal for selecting a title of program data set to be deleted from the HDD 6 among titles of program data sets stored in the HDD 6 and displayed on the display section 7 in the form of a list is input by operating the input section 9 (step S205).

In step S205, if the CPU 12 determines that an operation signal for selecting a title of program data set to be deleted from the HDD 6 among titles of program data sets stored in the HDD 6 and displayed on the display section 7 in the form of a list is not input (step S205; No), the procedure is returned to step S204.

In step S205, if the CPU 12 determines that an operation signal for selecting a title of program data set to be deleted from the HDD 6 among titles of program data sets stored in the HDD 6 and displayed on the display section 7 in the form of a list is input (step S205; Yes), the CPU 12 executes the selective delete program 14D to delete the program data set having the selected title from the HDD 6 (step S206), and the procedure is returned to step S202.

In step S204, if the CPU 12 determines that the all-delete key is pushed down (step S204; Yes), the CPU 12 executes the all-delete program 14E, and collectively deletes, from the HDD 6, program data sets to which copy-complete flags are granted among titles of program data sets stored in the HDD 6 which are displayed on the display section 7 in the form of a list (step S207), and the procedure is returned to step S202.

When the CPU 12 determines in step S202 that the free space in the HDD 6 is not smaller than the data amount (step S202; No), the title of the program data set as well as broadcast starting time and broadcast ending time of that program are stored in the programmed recording data file 140A in association with each other (step S208).

According to the above-explained digital broadcast recording apparatus 300 of the second embodiment, when the CPU 12 executes the copy-complete flag grant program 14B, and the copying operation of one program data set stored in the HDD 6 onto a DVD is completed, the copy-complete flag is granted in association with the one program data set stored in the HDD 6, the copy-complete flag granted based on execution of the copy-complete flag grant program 14B by the CPU 12 is stored in the HDD 6, a title of program data set stored in the HDD 6 and a predetermined indication of whether the program has been copied are displayed on the display section 7 in the form of a list based on the copy-complete flag stored in the HDD 6 by the CPU 12 executing the display control program 14C, a title of program data set to be deleted from the HDD 6 is selected on the input section 9 from titles of program data sets stored in the HDD 6 which are displayed on the display section 7 in the form of a list, and the program data set having the title selected on the input section 9 is deleted from the HDD 6 by executing the selective delete program 14D by the CPU 12. Therefore, it is possible to visually check whether the copying operation is completed from the list, and only the program data set which a user desires to delete from the HDD 6 can be deleted and even if the program data set has already been copied, the copied program data set can be kept in the HDD 6 if desired, and the copied program data set can be deleted more preferably.

When it is instructed by the input section 9 to delete all of the program data sets to which copy-complete flags are granted and it is instructed to delete all of the program data sets to which copy-complete flags are granted on the input section 9 by the CPU 12 executing the all-delete program 14E, the program data sets to which the copy-complete flags are granted are collectively deleted from the HDD 6 based on the copy-complete flags stored in the HDD 6. Therefore, program data sets which have already been copied onto a DVD can be deleted collectively only by instructing the "all-delete" on the input section 9. Thus, troubles for deleting the copied program data sets by selecting such program data sets one by one can be omitted, and a copied program data set can be deleted more preferably.

The CPU 12 executes the programmed recording program 140B and compares a data amount of a program data set to be stored in the HDD 6 and a free space in the HDD 6 with each other. It is determined whether the free space in the HDD 6 is smaller than the data amount, and if it is determined that the free space in the HDD 6 is smaller than the data amount, the shortage is displayed on the display section 7, and a user may be informed of the shortage of free space in the HDD 6.

The DVD recording apparatus may be integral with the digital broadcast recording apparatus.

Although the input section 9 has the all-delete key in the above-described embodiment, it is also possible to instruct the "all-delete" by clicking an all-delete icon displayed on the display section 7.

The second storage medium is not limited to a DVD, and may be a storage medium for a VTR or an HDD.

Data stored in the first storage medium and the second storage medium of the storage section is not limited to a digital broadcast program data set, and may be an analogue broadcast program data set or a video data set which is input from an external device such as another video play-back device.

According to a first aspect of the preferred embodiments of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section;
a selecting section to receive a selection of a title of program data set to be deleted from the storage section among the titles of program data sets stored in the storage section which are displayed on the display section in the form of the list;
a selective delete section to delete, from the storage section, the program data set which has the title selected by the selecting section;
an instructing section to instruct to delete all of the program data sets to which the copy-complete information is granted; and
an all-delete section to collectively delete, from the storage section, program data sets to which the copy-complete information is granted based on the copy-complete information stored in the copy-complete information storage section when the instructing section instructs to delete all of the program data sets to which the copy-complete information is granted.

In the video recording apparatus, when a copying operation of one program data set stored in the first storage medium provided in the storage section onto a second storage medium is completed, the copy-complete information grant section grants the copy-complete information in association with the one program data set stored in the storage section, the copy-complete information storage section stores the copy-complete information granted by the copy-complete information grant section, the display control section displays on the display section, in the form of a list, titles of the program data sets stored in the storage section and a predetermined indication of whether a copying operation of the program is completed based on the copy-complete information stored in the copy-complete information storage section, a title of program data set to be deleted from the storage section is selected by the selecting section among titles of program data sets stored in the storage section which are displayed on the display section in the form of the list, and the program data set having the title selected by the selecting section is deleted from the storage section by the selective delete section. Therefore, it is possible to visually check whether a copying operation is completed from the list, and only a program data set which a user desires to delete from the storage section can be deleted, a program data set which is already copied and which a user desires to keep in the storage section can be kept in the storage section, and it is possible to delete a copied program data set more preferably.

The instructing section instructs to delete all of the program data sets to which copy-complete information is granted, and when the all-delete section instructs to delete all of the program data sets to which the copy-complete information is granted by the instructing section, program data sets to which the copy-complete information is granted are collectively deleted from the storage section based on the copy-complete information stored in the copy-complete information storage section. Therefore, program data sets which have already been copied onto a second storage medium can collectively be deleted only by instructing the "all-delete" on the instructing section. Thus, troubles for deleting the copied program data sets by selecting such program data sets one by one can be omitted, and a copied program data set can be deleted more preferably.

According to a second aspect of the preferred embodiments of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section;
a selecting section to receive a selection of a title of program data set to be deleted from the storage section among the titles of program data sets stored in the storage section which are displayed on the display section in the form of the list; and
a selective delete section to delete, from the storage section, the program data set which has the title selected by the selecting section.

In the video recording apparatus, when a copying operation of one program data set stored in the first storage medium provided in the storage section onto a second storage medium is completed, the copy-complete information grant section grants the copy-complete information in association with the one program data set stored in the storage section, the copy-complete information storage section stores the copy-complete information granted by the copy-complete information grant section, the display control section displays on the display section, in the form of a list, titles of the program data sets stored in the storage section and a predetermined indication of whether a copying operation of the program is completed based on the copy-complete information stored in the copy-complete information storage section, a title of program data set to be deleted from the storage section is selected by the selecting section among titles of program data sets stored in the storage section which are displayed on the display section in the form of the list, and the program data set having the title selected by the selecting section is deleted from the storage section by the selective delete section. Therefore, it is possible to visually check whether a copying operation is completed from the list, and only a program data set which a user desires to delete from the storage section can be deleted, a program data set which is already copied and which a user desires to keep in the storage section can be kept in the storage section, and it is possible to delete a copied program data set more preferably.

According to a third aspect of the preferred embodiments of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section; and
an all-delete section to collectively delete, from the storage section, program data sets to which the copy-complete information is granted, among titles of program data sets stored in the storage section and displayed on the display section in the form of the list.

In the video recording apparatus, when a copying operation of one program data set stored in the first storage medium provided in the storage section onto a second storage medium is completed, the copy-complete information grant section grants the copy-complete information in association with the one program data set stored in the storage section, the copy-complete information storage section stores the copy-complete information granted by the copy-complete information grant section, the display control section displays on the display section, in the form of a list, titles of the program data sets stored in the storage section and a predetermined indication of whether a copying operation of the program is completed based on the copy-complete information stored in the copy-complete information storage section, and the all-delete section collectively deletes, from the storage section, program data sets to which the copy-complete information is granted among titles of program data sets stored in the storage section and displayed on the display section in the form of the list. Therefore, it is possible to visually check whether a copying operation is completed from the list, it is possible to check whether there is copied program data set which a user desires to keep in the storage section, program data sets which have already been copied onto a second storage medium can be deleted collectively, troubles for deleting the copied program data sets by selecting such program data sets one by one can be omitted, and it is possible to delete a copied program data set more preferably.

According to a fourth aspect of the preferred embodiments of the present invention, there is provided a video recording apparatus, comprising:
a storage section in which a first storage medium which stores a program data set is provided and the program data set stored in the storage section is copied onto a second storage medium;
a copy-complete information grant section which grants copy-complete information in association with a title of one program data set stored in the storage section when a copying operation of the one program data set stored in the storage section onto the second storage medium is completed;
an instructing section to instruct to delete all of the program data sets to which the copy-complete information is granted; and
an all-delete section to collectively delete, from the storage section, program data sets to which the copy-complete information is granted based on the copy-complete information stored in the copy-complete information storage section when the instructing section instructs to delete all of the program data sets to which the copy-complete information is granted.

In the video recording apparatus, when a copying operation of one program data set stored in the first storage medium provided in the storage section onto a second storage medium is completed, the copy-complete information grant section grants the copy-complete information in association with the one program data set stored in the storage section, the copy-complete information storage section stores the copy-complete information granted by the copy-complete information grant section, the instructing section instructs to delete all of the program data sets to which the copy-complete information is granted, and when the all-delete section instructs to delete all of the program data sets to which the copy-complete information is granted on the instructing section, the program data sets to which the copy-complete information is granted are collectively deleted from the storage section based on the copy-complete information stored in the copy-complete information storage section. Therefore, program data sets which have already been copied onto a second storage section can be deleted collectively only by instructing the "all delete" by the input section. Thus, troubles for deleting the copied program data sets by selecting such program data sets one by one can be omitted, and a copied program data set can be deleted more preferably.

Although various exemplary embodiments have been shown and described, the invention is not limited to the embodiments shown. Therefore, the scope of the invention is intended to be limited solely by the scope of the claims that follow.

## Claims

1. A video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section;
a selecting section to receive a selection of a title of program data set to be deleted from the storage section among the titles of program data sets stored in the storage section which are displayed on the display section in the form of the list;
a selective delete section to delete, from the storage section, the program data set which has the title selected by the selecting section;
an instructing section to instruct to delete all of the program data sets to which the copy-complete information is granted; and
an all-delete section to collectively delete, from the storage section, program data sets to which the copy-complete information is granted based on the copy-complete information stored in the copy-complete information storage section when the instructing section instructs to delete all of the program data sets to which the copy-complete information is granted.

2. A video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section;
a selecting section to receive a selection of a title of program data set to be deleted from the storage section among the titles of program data sets stored in the storage section which are displayed on the display section in the form of the list; and
a selective delete section to delete, from the storage section, the program data set which has the title selected by the selecting section.

3. A video recording apparatus, comprising:
a storage section in which a first storage medium which stores a program data set is provided and the program data set stored in the storage section is copied onto a second storage medium;
a copy-complete information grant section which grants copy-complete information in association with one program data set stored in the storage section when a copying operation of the one program data set stored in the storage section onto the second storage medium is completed;
a copy-complete information storage section to store copy-complete information granted by the copy-complete information grant section;
a display control section to display on a display section, in a form of a list, titles of program data sets stored in the storage section and a predetermined indication of whether a copying operation of the program data set is completed, based on the copy-complete information stored in the copy-complete information storage section; and
an all-delete section to collectively delete, from the storage section, program data sets to which the copy-complete information is granted, among titles of program data sets stored in the storage section and displayed on the display section in the form of the list.

4. A video recording apparatus, comprising:
a storage section in which a first storage medium which stores a program data set is provided and the program data set stored in the storage section is copied onto a second storage medium;
a copy-complete information grant section which grants copy-complete information in association with a title of one program data set stored in the storage section when a copying operation of the one program data set stored in the storage section onto the second storage medium is completed;
an instructing section to instruct to delete all of the program data sets to which the copy-complete information is granted; and
an all-delete section to collectively delete, from the storage section, program data sets to which the copy-complete information is granted based on the copy-complete information stored in the copy-complete information storage section when the instructing section instructs to delete all of the program data sets to which the copy-complete information is granted.
